# EUROPEAN PATENT SPECIFICATION

(11) **EP 1 394 438 B1**
(45) Date of publication and mention of the grant of the patent: **26.04.2006**
(21) Application number: 02257363.8
(22) Date of filing: 23.10.2002
(51) Int. Cl.: F16D 69/02

(54) **Friction material with friction modifying layer**
Reibungsmaterial mit Reibungsveräanderungsschicht
Materiau de friction avec couche modificatrice de friction

(30) Priority: 30.08.2002 US 233318
(43) Date of publication of application: 03.03.2004
(73) Proprietor: BorgWarner Inc., Auburn Hills, MI 48326-2872 (US)
(72) Inventor: Lam, Robert C., Rochester, Michigan 48306 (US); Dong, Feng, Naperville, Illinois 60565 (US); Chen, Yih-Fang, Lisle, Illinois 60532 (US); Chavdar, Bulent, Wheaton, Illinois 60187 (US)
(74) Representative: Lerwill, John

(56) References cited:
- EP-A- 1 039 168
- EP-A- 1 203 897
- WO-A-98/09093

## Description

### TECHNICAL FIELD

The present invention relates to a fiction material having a first or lower layer comprising a fibrous base material and a second or top layer comprising at least one type of friction modifying particles. The friction material of the present invention has high coefficient of friction characteristics and extremely high heat resistance. The friction material also has improved strength; wear resistance and noise resistance.

### BACKGROUND ART

New and advanced continuous torque transmission systems, having continuous slip torque converters and shifting clutch systems are being developed by the automotive industry. These new systems often involve high energy requirements. Therefore, the friction materials technology must be also developed to meet the increasing energy requirements of these advanced systems.

In particular, a new high performance, durable friction material is needed. The new friction material must be able to withstand high speeds wherein surface speeds are up to about 65m/seconds. Also, the friction material must be able to withstand high facing lining pressures up to about 1500 psi. It is also important that the friction material be useful under limited lubrication conditions.

The friction material must be durable and have high heat resistance in order to be useful in the advanced systems. Not only must the friction material remain stable at high temperatures, it must also be able to rapidly dissipate the high heat that is being generated during operating conditions.

The high speeds generated during engagement and disengagement of the new systems mean that a friction material must be able to maintain a relatively constant friction throughout the engagement. It is important that the frictional engagement be relatively constant over a wide range of speeds and temperatures in order to minimize "shuddering" of materials during braking or the transmission system during power shift from one gear to another. It is also important that the friction material have a desired torque curve shape so that during frictional engagement the friction material is noise or "squawk" free.

In particular, transmission and torque-on-demand systems incorporate slipping clutches mainly for the fuel efficiency and driving comfort. The role of the slip clutch within these systems varies from vehicle launching devices, such as wet start clutches, to that of a torque converter clutches. According to the operating conditions, the slip clutch can be differentiated into three principle classes: (1) Low Pressure and High Slip Speed Clutch, such as wet start clutch; (2) High Pressure and Low Slip Speed Clutch, such as Converter Clutch; and (3) Extreme Low Pressure and Low Slip Speed Clutch, such as neutral to idle clutch.

The principal performance concerns for all applications of the slip clutch are the prevention of shudder and the energy management of the friction interface. The occurrence of shudder can be attributed to many factors including the friction characteristics of the friction material, the mating surface's hardness and roughness, oil film retention, lubricant chemistry and interactions, clutch operating conditions, driveline assembly and hardware alignment, and driveline contamination. The friction interface energy management is primarily concerned with controlling interface temperature and is affected by the pump capacity, oil flow path and control strategy. The friction material surface design also contributes to the efficiency of interface energy management.

Previously, asbestos fibers were included in the friction material for temperature stability. Due to health and environmental problems, asbestos is no longer being used. More recent friction materials have attempted to overcome the absence of the asbestos in the friction material by modifying impregnating paper or fiber materials with phenolic or phenolic-modified resins. These friction materials, however, do not rapidly dissipate the high heat generated, and do not have the necessary heat resistance and satisfactory high coefficient of friction performance now needed for use in the high speed systems currently being developed.

The Kearsey U.S. Patent No. 5,585,166 describes a multi layer friction lining having a porous substrate layer (cellulose and synthetic fibers, filler and thermoset resin) and a porous friction layer (nonwoven synthetic fibers in a thermoset resin) where the friction layer has a higher porosity than the substrate layer.

The Seiz U.S. Patent No. 5,083,650 reference involves a multi-step impregnating and curing process; i.e., a paper impregnated with a coating composition, carbon particles are placed on the paper, the coating composition in the paper is partially cured, a second coating composition is applied to the partially cured paper, and finally, both coating compositions are cured.

Various paper based fibrous materials have been developed that are co-owned by the assignee herein, BorgWamer Inc., for use in friction materials. These references are fully incorporated herein by reference.

In particular, Lam et al., U.S. Patent No. 5,998,307 relates to a friction material having a primary fibrous base material impregnated with a curable resin where the porous primary layer comprises at least one fibrous material and a secondary layer comprises carbon particles covering at least about 3 to about 90% of the surface of the primary layer.

The Lam et al., U.S. Patent No. 5,858,883 relates to a base material having a primary layer of less fibrillated aramid fibers, synthetic graphite, and a filler, and a secondary layer comprising carbon particles on the surface of the primary layer.

The Lam et al., U.S. Patent No. 5,856,224 relates to a friction material comprising a base impregnated with a curable resin. The primary layer comprises less fibrillated aramid fibers, synthetic graphite and filler; the secondary layer comprises carbon particles and a retention aid.

The Lam et al. U.S. Patent No. 5,958,507 relates to a process for producing a friction material where about 3 to about 90% of at least one surface of the fibrous material which comprises less fibrillated aramid fibers is coated with carbon particles.

The Lam, U.S. Patent No. 6,001,750 relates to a friction material comprising a fibrous base material impregnated with a curable resin. The porous primarily layer comprises less fibrillated aramid fibers, carbon particles, carbon fibers, filler material, phenolic novoloid fibers, and optionally, cotton fibers. The secondary layer comprises carbon particles which cover the surface at about 3 to about 90% of the surface.

Yet another commonly owned patent application, EP 1203897A relates to a paper type friction material having a porous primary fibrous base layer with friction modifying particles covering about 3 to about 90% of the surface area of the primary layer. The friction modifying particles may have a size from about 0.5 to about 80 microns and may be silica particles.

In addition, various paper type fibrous base materials are described in commonly owned BorgWarner Inc. Lam et al., U.S. Patent Nos. 5,753,356 and 5,707,905 which describe base materials comprising less fibrillated aramid fibers, synthetic graphite and filler, which references are also fully incorporated herein by reference.

Another commonly owned patent, the Lam, U.S. Patent No. 6,130,176, relates to non-metallic paper type fibrous base materials comprising less fibrillated aramid fibers, carbon fibers, carbon particles and filler.

For all types of friction materials, in order to be useful in "wet" applications, the friction material must have a wide variety of acceptable characteristics. The friction material must have good anti-shudder characteristics; have high heat resistance and be able to dissipate heat quickly; and, have long lasting, stable and consistent frictional performance. If any of these characteristics are not met, optimum performance of the friction material is not achieved.

It is also important that a suitable impregnating resin be used in the friction material in order to form a high energy application friction material. The friction material must have good shear strength during use when the friction material is infused with brake fluid or transmission oil during use.

Accordingly, it is an object of the present invention to provide an improved friction material with reliable and improved properties compared to those of the prior art.

A further object of this invention is to provide a friction materials with improved "anti-shudder", "hot spot" resistance, high heat resistance, high friction stability and durability, and strength.

In accordance with the present invention there is provided a friction material comprising a first layer comprising a fibrous base material, and a second layer comprising at least one type of friction modifying particle on a top surface of the fibrous base material, characterized in that the second layer has an average thickness of about 30-200 µm, that the top layer has a permeability lower than the first layer, and that the friction modifying particles comprise silica particles having an average diameter size of from about 0.1 to about 80 microns and having an irregular shape.

The layer of the friction modifying particles has a preferred thickness of about 60 to about 100 µm. The friction modifying particles can have an average diameter size from about 0.5 to about 20 microns, and in certain embodiments, from about 0.1 to about 0.15 microns. The fibrous base material can have an average voids volume from about 50% to about 85%.

The friction modifying particles may comprise silica particles such as celite particles, diatomaceous earth, and/or a mixture of carbon particles and silica particles.

In certain embodiments, the friction particles and have an average size ranging from about 2 to about 20µm.

### IN THE DRAWINGS

Fig. 1a is a schematic diagram showing a friction material having a fibrous base material and at least one type of friction modifying particle forming a top layer.
Fig. 1b and 1c are SEM images. Fig. 1b shows the Ex. 1 and Fig. 1c shows Compar. C.
Figs. 2a-2d are SEM images of deposit surfaces at 500 magnification; Fig. 2a shows Compar. A; Fig. 2b shows Compar. B; Fig. 2c shows Compar. C and Fig. 2d shows Ex. 1.
Figs. 3a-d are SEM images of deposit surface at 100 magnification, Figs. 3a and 3b show Compar. C; Figs. 3c and 3d show Ex. 1.
Fig. 4 is a series of graphs that show wet start clutch bench evaluations at cycles 10, 50, 100, 500, 1000, 2000, 3000, and 4000 for Compar. C.
Fig. 5 is a series of graphs that show wet start clutch bench evaluations at cycles 10, 50, 100, 500, 1000, 2000, 3000, and 4000 for Ex. 1.
Figs. 6a-d are graphs that show the T-N for Ex. 1 and Compar. C in grooved materials showing the midpoint coefficient of friction.
Fig. 7 is a graph that shows the slope versus slipping time for Ex. 1 and Compar. C for mold grooved materials.

### DETAILED DESCRIPTION OF INVENTION

In order to achieve the requirements discussed above, many friction materials were evaluated for friction and heat resistant characteristics under conditions similar to those encountered during operation. Commercially available friction materials were investigated and proved not to be suitable for use in high energy applications.

According to the present invention, a friction material has a uniform dispersion of the curable resin throughout a fibrous base material and a substantially uniform layer of friction modifying materials on a top or outer surface of the fibrous base material.

The fibrous base material layer is more porous than the top layer of the friction modifying particles.

According to one aspect of the present invention, the top layer has a lower permeability in both the radial and normal directions than the fibrous base material layer. In one aspect of the present invention, the fibrous base material average voids volume from about 50% to about 85%. In certain embodiments, the fibrous base material has an average pore/void/interstice diameter of about 5 µm.

Further, in certain embodiments, the friction modifying particles comprise, celite particles, and in certain other embodiments, diatomaceous earth. In one particular aspect of the present invention, the friction modifying particles comprise celite. In still other embodiments, the friction modifying particles can comprise a mixture of carbon particles and silica particles.

In still other embodiments, the friction modifying particles can also include other friction modifying particles such as metal oxides, nitrides, carbides, and mixtures thereof. It is within the contemplated scope of the present invention that these embodiments can include, for example, silica oxides, iron oxides, aluminum oxides, titanium oxides and the like; silica nitrides, iron nitrides, aluminum nitrides, titanium nitrides and the like; and, silica carbides, iron carbides, aluminum carbides, titanium carbides and the like.

Various fibrous base materials are useful in the friction material of the present invention, including, for example, non-asbestos fibrous base materials comprising, for example, fabric materials, woven and/or nonwoven materials. Suitable fibrous base materials include, for example, fibers and fillers. The fibers can be organic fibers, inorganic fibers and carbon fibers. The organic fibers can be aramid fibers, such as fibrillated and/or nonfibrillated aramid fibers, acrylic fibers, polyester fibers, nylon fibers, polyamide fibers, cotton/cellulose fibers and the like. The fillers can be, for example, silica, diatomaceous earth, graphite, alumina, cashew dust and the like.

In other embodiments, the fibrous base material can comprise fibrous woven materials, fibrous non-woven materials, and paper materials. Further, examples of the various types of fibrous base materials useful in the present invention are disclosed in the above-referenced BorgWarner U.S. patents which are fully incorporated herein by reference. It should be understood however, that other embodiments of the present invention can include yet different fibrous base materials.

In certain embodiments, the friction material comprises a fibrous base material which has a plurality of voids or interstices therein. The size of the voids in the fibrous base material can range from about 0.5 µm to about 20 µm.

In certain embodiments, the fibrous base material preferably has a void volume of about 50 to about 60% such that the fibrous base material is considered "dense" as compared to a "porous" woven material.

In certain embodiments, friction material further comprises a resin material which at least partially fills the voids in the fibrous base material. The resin material is substantially uniformly dispersed throughout the thickness of the fibrous base material.

The friction material further comprises a top, or second, layer of friction modifying particles on a first, or top, surface of the fibrous base material. The presence of the friction modifying materials as a top layer on the fibrous base material provides the friction material with many advantageous properties, including good oil retention properties.

In certain embodiments, the fibrous base material comprises a fibrous base material where less fibrillated fibers and carbon fibers are used in the fibrous base material to provide a desirable pore structure to the friction material. The fiber geometry not only provides increased thermal resistance, but also provides delamination resistance and squeal or noise resistance. Also, in certain embodiments, the presence of the carbon fibers and carbon particles aids in the fibrous base material in increasing the thermal resistance, maintaining a steady coefficient of friction and increasing the squeal resistance. A relatively low amount of cotton fibers in the fibrous base material can be included to improve the friction material's clutch "break-in" characteristics.

The use of less fibrillated aramid fibers and carbon fibers in a fibrous base material improves the friction material's ability to withstand high temperatures. Less fibrillated aramid fibers generally have few fibrils attached to a core fiber. The use of the less fibrillated aramid fibers provides a friction material having a more porous structure; i.e., there are larger pores than if a typical fibrillated aramid fiber is used. The porous structure is generally defined by the pore size and liquid permeability. In certain embodiments, the fibrous base material defines pores ranging in mean average size from about 2.0 to about 25 microns in diameter, and in certain embodiments, from about 2 to about 10 microns. In certain embodiments, the mean pore size ranges from about 2.5 to about 8 microns, and in certain embodiments from about 5 to about 8 microns, in diameter and the friction material had readily available air voids of at least about 50% and, in certain embodiments, at least about 60% or higher.

Also, in certain embodiments, it is desired that the aramid fibers have a length ranging from about 0.5 to about 10 mm and a Canadian Standard Freeness (CSF) of greater than about 300. In certain embodiments, it is also desired to use less fibrillated aramid fibers which have a CSF of about 450 to about 550 preferably about 530 and greater; and, in other certain embodiments, about 580-650 and above and preferably about 650 and above. In contrast, more fibrillated fibers, such as aramid pulp, have a freeness of about 285-290.

The "Canadian Standard Freeness" (T227 om-85) means that the degree of fibrillation of fibers can be described as the measurement of freeness of the fibers. The CSF test is an empirical procedure which gives an arbitrary measure of the rate at which a suspension of three grams of fibers in one liter of water may be drained. Therefore, the less fibrillated aramid fibers have higher freeness or higher rate of drainage of fluid from the friction material than more fibrillated aramid fibers or pulp. Friction materials comprising the aramid fibers having a CSF ranging from about 430-650 (and in certain embodiments preferably about 580-640, or preferably about 620-640), provide superior friction performance and have better material properties than friction materials containing conventionally more fibrillated aramid fibers. The longer fiber length, together with the high Canadian freeness, provide a friction material with high strength, high porosity and good wear resistance. The less fibrillated aramid fibers (CSF about 530- about 650) have especially good long-term durability and stable coefficients of friction.

Various fillers are also useful in the primary layer of the fibrous base material of the present invention. In particular, silica fillers, such as diatomaceous earth, are useful. However, it is contemplated that other types of fillers are suitable for use in the present invention and that the choice of filler depends on the particular requirements of the friction material.

In certain embodiments, cotton fiber is added to the fibrous base material of the present invention to give the fibrous material higher coefficients of friction. In certain embodiments, about 5 to about 20%, and, in certain embodiments, about 10% cotton can also be added to the fibrous base material.

One example of a formulation for the primary layer of a fibrous base material as described in the above incorporated by reference U.S. Patent No. 6,130,176, which comprises about 10 to about 50%, by weight, of a less fibrillated aramid fiber; about 10 to about 35%, by weight, of activated carbon particles; about 5 to about 20%, by weight, cotton fibers, about 2 to about 15%, by weight, carbon fibers; and, about 10 to about 35%, by weight of a filler material.

In certain other embodiments, one particular formulation has found to be useful comprises about 35 to about 45%, by weight, less fibrillated aramid fibers; about 10 to about 20%, by weight, activated carbon particles; about 5 to about 15% cotton fibers; about 2 to about 20%, by weight, carbon fibers; and, about 25 to about 35%, by weight, filler.

In still other embodiments, the base material comprises from about 15 to about 25% cotton, about 40 to about 50% aramid fibers, about 10 to about 20% carbon fibers, about 5 to about 15% carbon particles, about 5 to about 15% celite, and, optionally about 1 to about 3% latex add-on.

When the fibrous base material has a higher mean pore diameter and fluid permeability, the friction material is more likely to run cooler or with less heat generated in a transmission due to better automatic transmission fluid flow throughout the porous structure of the friction material. During operation of a transmission system, the fluid tends, over time, to breakdown and form "oil deposits", especially at high temperatures. These "oil deposits" decrease the pore openings. Therefore, when the friction material initially starts with lager pores, there are more open pores remaining during the useful life of the friction material.

The friction modifying particles on the top surface of the fibrous base material provides an improved three-dimensional structure to the resulting friction material.

The layer of oil or fluid on the top friction modifying particle layer keeps the oil film on the surface, thus making it more difficult for the oil or fluid to initially penetrate into the friction material. The top friction modifying material layer holds the fluid lubricant on the surface and increases the oil retaining capacity of the friction material. The friction material of the present invention thus allows an oil film to remain on its surface. This also provides good coefficient of friction characteristics and good slip durability characteristics.

In certain embodiments, the average area of coverage of friction modifying particles forming the top layer is in the range of about 80 to about 100% of the surface area. In certain other embodiments, the average area of coverage ranges from about 90 to about 100%. The friction modifying particles substantially remain on the top surface of the base material at a preferred average thickness of about 35 to about 200 µm. In certain embodiments, the top layer has a preferred average thickness of about 60 to about 100 microns.

The uniformity of the deposited layer of the friction modifying particles on the surface of the fibrous base material is achieved by using a size of the particles that can range from about 0.1 to about 80 microns in diameter, and in certain embodiments from about 0.5 to about 20 microns, and in other certain embodiments from about 0.1 to about 0.5 microns. In certain embodiments, the particles have an average particle diameter of about 12 µm. In certain embodiments, it has been discovered that if the friction modifying particle size is too large or too small, a desired optimum three-dimensional structure not achieved and, consequently, the heat dissipation and antishudder characteristics are not as optimum.

The amount of coverage of friction modifying particles on the fibrous base material is sufficiently thick such that the layer of friction modifying particles has a three dimensional structure comprised of individual particles of the friction modifying material and voids or interstices between the individual particles. In certain embodiments, the top layer (of friction modifying particles) is less porous than the lower layer (of the fibrous base material).

Various types of friction modifying particles are useful in the friction material. In embodiments, of the invention the friction modifying particles include silica particles. Other can have friction modifying particles are possible such as resin powders such as phenolic resins, silicone resins epoxy resins and mixtures thereof. Embodiments can include partial and/or fully carbonized carbon powders and/or particles and mixtures thereof; and mixtures of such friction modifying particles. In certain embodiments, silica particles such as diatomaceous earth, Celite®, Celatom®, and/or silicon dioxide are especially useful. The silica particles are inexpensive inorganic materials which bond strongly to the base material. The silica particles provide high coefficients of friction to the friction material. The silica particles also provide the base material with a smooth friction surface and provides a good "shift feel" and friction characteristics to the friction material such that any "shudder" is minimized.

In embodiments of the invention the silica friction modifying particles have an irregular shape. The irregular shaped friction modifying particles act to hold a desired quantity of lubricant at the surface of the fibrous base material due to the capillary action of many invaginations on the surface of the irregularly shaped fiction modifying particle. In certain embodiments, a silica material such as celite is useful as a friction modifying material since celite has an irregular or rough surface.

In certain embodiments, the friction material can be impregnated using different resin systems. In certain embodiments, it is useful to use at least one phenolic resin, at least one modified phenolic-based resin, at least one silicone resin, at least one modified silicone resin, at least one epoxy resin, at least one modified epoxy resin, and/or combinations of the above. In certain other embodiments, a silicone resin blended or mixed with a phenolic resin in compatible solvents is useful.

Various resins are useful in the present invention. In certain embodiments, the resin can comprise phenolic or phenolic based resins, preferably so that the saturant material comprises about 45 to about 65 parts, by weight, per 100 parts, by weight, of the friction material. After the resin mixture has been applied to the fibrous base material and the fibrous base material has been impregnated with the resin mixture, the impregnated fibrous base material is heated to a desired temperature for a predetermined length of time to form a friction material. In certain embodiments, the heating cures the phenolic resin present in the saturant at a temperature of about 300°F. When other resins are present in the saturant, such as a silicone resin, the heating cures the silicone resin at a temperature of about 400°F. Thereafter, the cured friction material is adhered to a desired substrate by suitable means.

Various useful resins include phenolic resins and phenolic-based resins. It is to be understood that various phenolic-based resins which include in the resin blend other modifying ingredients, such as epoxy, butadiene, silicone, tung oil, benzene, cashew nut oil and the like, are contemplated as being useful with the present invention. In the phenolic-modified resins, the phenolic resin is generally present at about 50% or greater by weight (excluding any solvents present) of the resin blend. However, it has been found that friction materials, in certain embodiments, can be improved when the mixture includes resin blend containing about 5 to about 80%, by weight, and for certain purposes, about 15 to about 55%, and in certain embodiments about 15 to about 25%, by weight, of silicone resin based on the weight of the silicone-phenolic mixture (excluding solvents and other processing acids).

Examples of useful phenolic and phenolic-silicone resins useful in the present invention are fully disclosed in the above-referenced BorgWamer U.S. patents which are fully incorporated herein, by reference. Silicone resins useful, in the present invention include, for example, thermal curing silicone sealants and silicone rubbers. Various silicone resins are useful with the present invention. One resin, in particular, comprises xylene and acetylacetone (2,4-pentanedione). The silicone resin has a boiling point of about 362°F (183°C), vapor pressure at 68°F mm, Hg: 21, vapor density (air=1) of 4.8, negligible solubility in water, specific gravity of about 1.09, percent volatile, by weight, 5% evaporation rate (ether=1), less than 0.1, flash point about 149°F (65°C) using the Pensky-Martens method. It is to be understood that other silicone resins can be utilized with the present invention. Other useful resin blends include, for example, a suitable phenolic resin comprises (% by wt.): about 55 to about 60% phenolic resin; about 20 to about 25% ethyl alcohol; about 10 to about 14% phenol; about 3 to about 4% methyl alcohol; about 0.3 to about 0.8% formaldehyde; and, about 10 to about 20% water. Another suitable phenolic-based resin comprises (% by wt.): about 50 to about 55% phenol/formaldehyde resin; about 0.5% formaldehyde; about 11% phenol; about 30 to about 35% isopropanol; and, about 1 to about 5% water.

It has also been found that another useful resin is an epoxy modified phenolic resin which contains about 5 to about 25 percent, by weight, and preferably about 10 to about 15 percent, by weight, of an epoxy compound with the remainder (excluding solvents and other processing aids) phenolic resin. The epoxy-phenolic resin compound provides, in certain embodiments, higher heat resistance to the friction material than the phenolic resin alone.

In certain embodiments, it is preferred that resin mixture comprises desired amounts of the resin and the friction modifying particles such that the target pick up of resin by the fibrous base material ranges from about 25 to about 70%, in other embodiments, from about 40 to about 65%, and, in certain embodiments, about 60 to at least 65%, by weight, total silicone-phenolic resin. After the fibrous base material is saturated with the resin, the fibrous base material is cured for a period of time (in certain embodiments for about 1/2 hour) at temperatures ranging between 300-400°C to cure the resin binder and form the friction material. The final thickness of the friction material depends on the initial thickness of the fibrous base material.

It further contemplated that other ingredients and processing aids known to be useful in both preparing resin blends and in preparing fibrous base materials can be included, and are within the contemplated scope of the present invention.

In certain embodiments, the resin mixture can comprise both the silicone resin and the phenolic resin which are present in solvents which are compatible to each other. These resins are mixed together (in preferred embodiments) to form a homogeneous blend and then used to saturate the fibrous base material. In certain embodiments, there is not the same effect if the fibrous base material is impregnated with a phenolic resin and then a silicone resin is added thereafter or vice versa. There is also a difference between a mixture of a silicone-phenolic resin solution, and emulsions of silicone resin powder and/or phenolic resin powder. When silicone resins and phenolic resins are in solution they are not cured at all. In contrast, the powder particles of silicone resins and phenolic resins are partially cured. The partial cure of the silicone resins and the phenolic resins inhibits a good saturation of the base material.

In certain embodiments of the present invention, the fibrous base material is impregnated with a blend of a silicone resin in a solvent which is compatible with the phenolic resin and its solvent. In one embodiment, isopropanol has been found to be an especially suitable solvent. It is to be understood, however, that various other suitable solvents, such as ethanol, methyl-ethyl ketone, butanol, isopropanol, toluene and the like, can be utilized in the practice of this invention. The presence of a silicone resin, when blended with a phenolic resin and used to saturate the fibrous base material, causes the resulting friction materials to be more elastic than fibrous base materials impregnated only with a phenolic resin. When pressures are applied to the silicone-phenolic resin blended impregnated friction material of the present invention, there is a more even distribution of pressure which, in turn, reduces the likelihood of uneven lining wear. After the silicone resin and phenolic resin are mixed together with the friction modifying particles, the mixture is used to impregnate the fibrous base material.

The friction material of the present invention includes a layer of friction modifying particles on a top surface of a fibrous base material provides a friction material with good anti-shudder characteristics, high resistance, high coefficient of friction, high durability, good wear resistance and improved break-in characteristics.

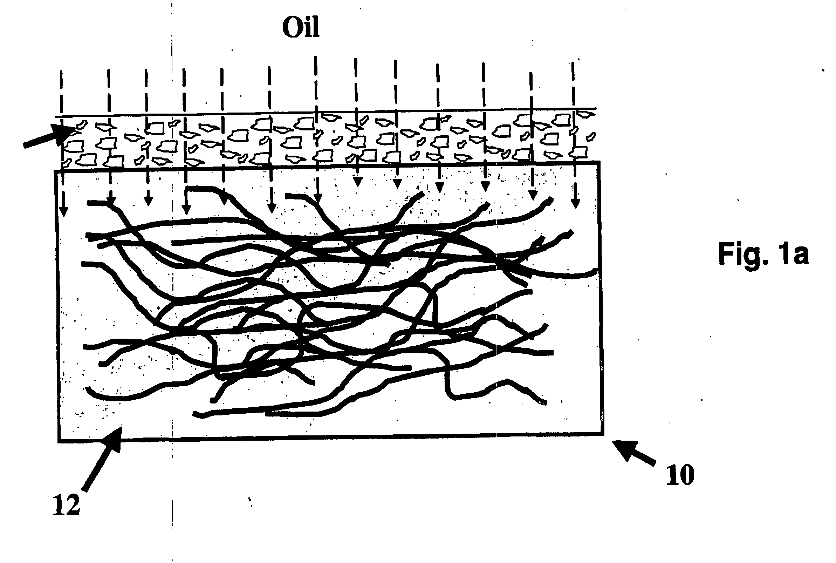

Fig. 1a shows a schematic diagram of a friction material 10 having a fibrous base material 12 and a layer of surface friction modifying materials 14 substantially covering the fibrous base material 12.

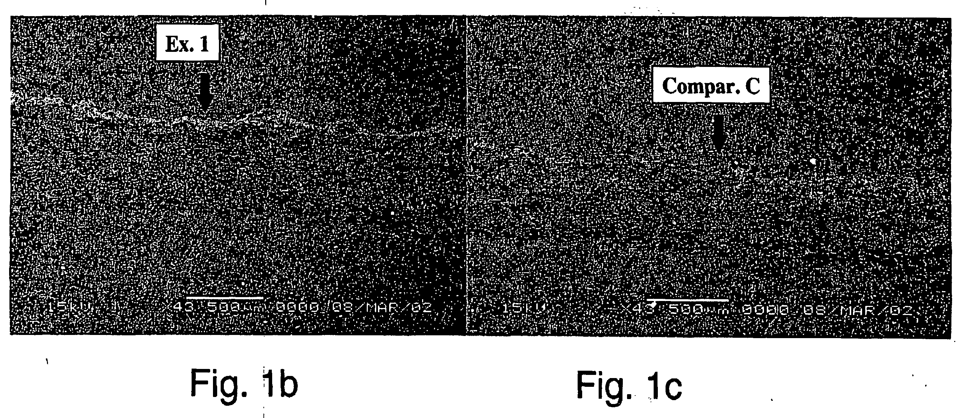

Fig. 1b shows an SEM image of a deposit material comprising celite for Example 1 where the friction modifying materials are deposited as a layer on a fibrous base material. Fig. 1c shows a comparative example, Compar. C, where the friction modifying materials are not present as a layer but rather as an incomplete coating on the fibrous base material.

In the Compar. C, the friction material has many large holes such that at least some of the lubricant does not stay on the surface of the friction material. The friction particles in the Compar. C penetrate deeper into the fibrous base material such that surface pores remain fairly open.

Figs. 2a-d are SEM images. Fig. 2a shows a comparative example, Compar. A, which is a commercial friction material formulation. Fig. 2a shows that there is an incomplete fibrous coverage of the fibrous base material and shows underlying fibers of the fibrous base material.

Fig. 2b shows Compar. B, another commercially produced friction product. Fig. 2b shows incomplete coverage of the fibrous base material and shows the underlying fibers of the fibrous base material.

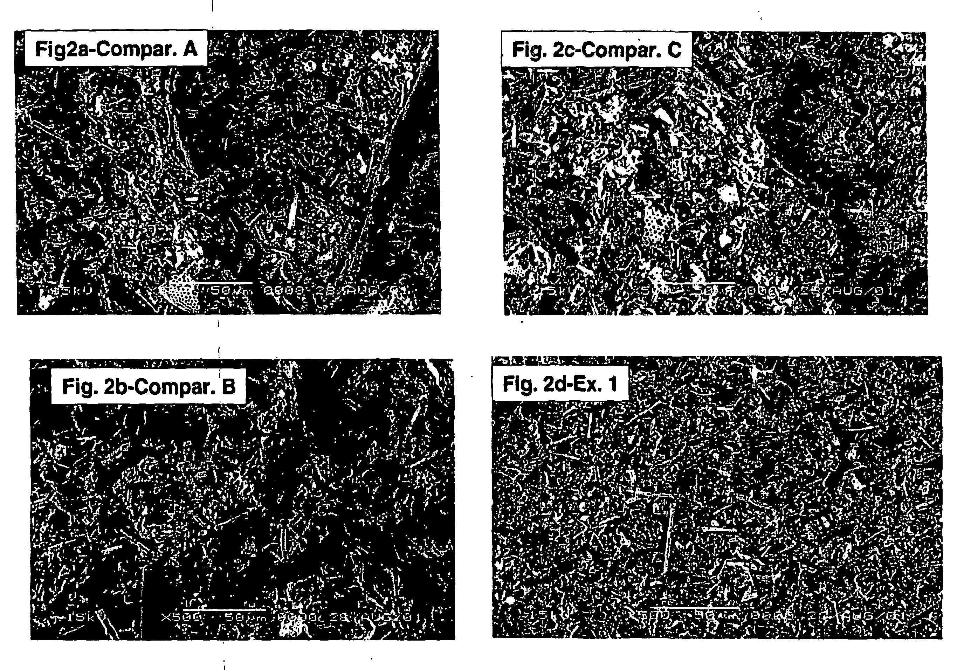

Compar. C shown in Fig. 2c is another commercially produced friction product having a fibrous base material. The material is very porous and the fibers and filler undemeath the layer of friction modifying particles can be seen.

The layer of friction modifying materials used in the friction material of the present invention provides the friction material with good anti-shudder characteristics. In the embodiment shown, the high temperature synthetic fibers and porosity of the fibrous base material provides improved heat resistance.

Example 1, shown in Fig. 2d, is a friction material of the present invention which shows a layer of the friction modifying particles on a top surface of the fibrous base material.

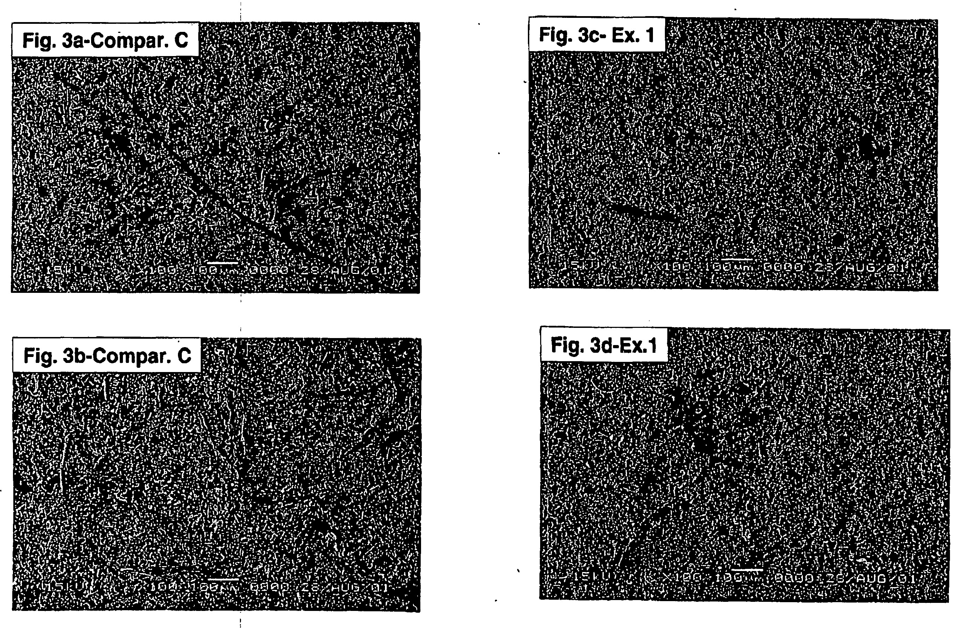

The SEM photographs in Figs. 3a-3b of the Compar. C material show incomplete coverage of the fibrous base material. In contrast, the SEM photographs in Figs. 3c-d of the Example 1 show a smoother surface and a nearly complete coverage of the fibrous base material.

The following examples provide further evidence that the gradient of friction modifying particles within the friction material of the present invention provides an improvement over conventional friction materials. The friction materials have desirable coefficient of friction, heat resistance and durability characteristics. Various preferred embodiments of the invention are described in the following examples, which however, are not intended to limit the scope of the invention.

### Examples

### Example I

A wet start clutch evaluation was conducted (4000 cycles, 950kPa, 2100rpm). for Ex. 1 and Compar. C.

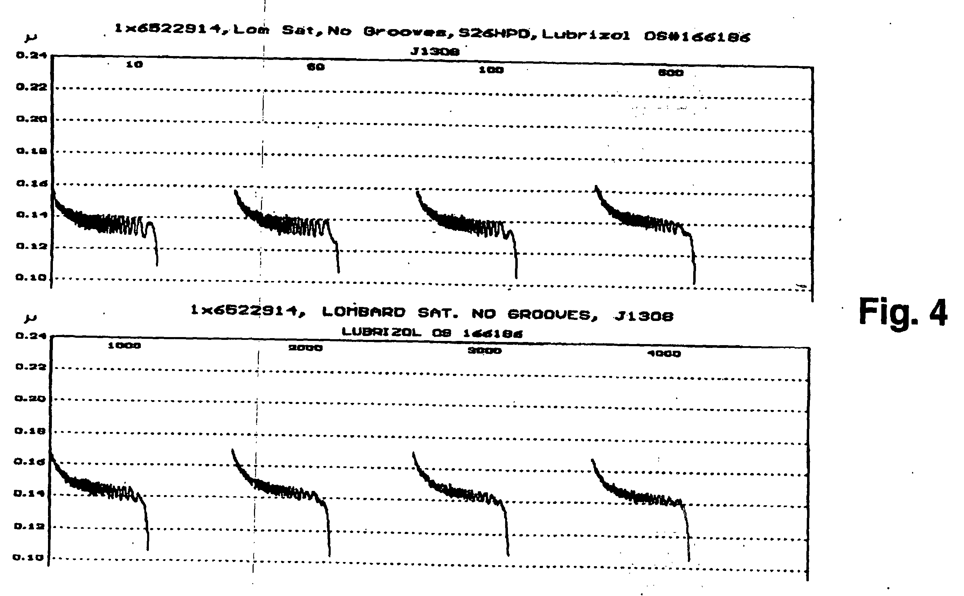

Fig. 4 shows the engagement curves at 10, 50,100, 500,1000, 2000, 3000 and 4000 cycles for the comparative example C (Compar. C) which are smooth and descending curves. The Compar. C has a coefficient of friction of about 0.14.

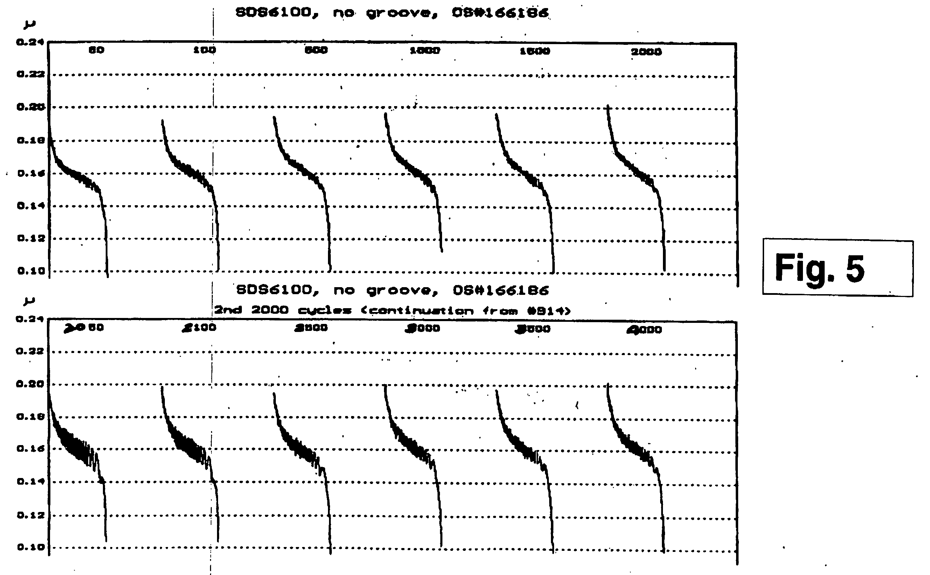

Fig. 5 shows engagement curves at 10, 50, 100, 500, 1000, 2000, 3000 and 4000 cycles for the Ex. 1 of the present invention which are also smooth, but more sharply descending. The difference in curve shapes between Fig. 4 and Fig. 5 clearly shows the higher coefficient and shows that the µ-v slope is positive. The coefficient of friction increases up to about 0.16.

### Example II

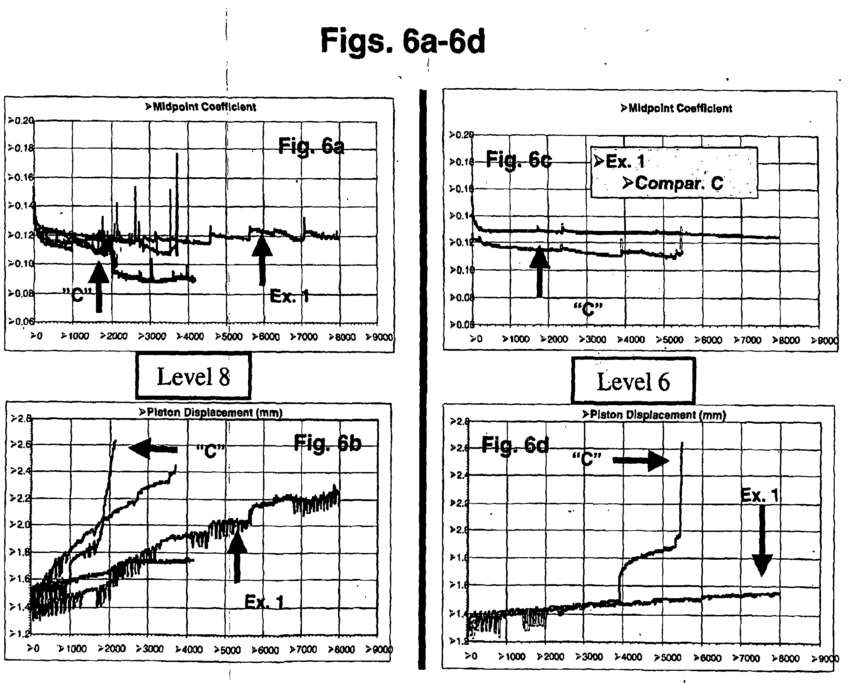

Figs. 6a-6d show the TN midpoint coefficient results of the Compar.1 and Ex. 1 in ungrooved plates for shifting clutch at 6000 rpms. This is a durability-high energy test. As shown in the Figs., the Ex. 1 has a durability of over 7000 cycles while Compar. C fails early in the experiment due to thickness changes in the friction material. The Ex. 1 material of the present invention shows no rapid change in thickness and is more stable. This characteristic is important in shifting clutches and in other applications where for example, it is not desirable to have the piston travel a different distance than originally engineered.

### Example III

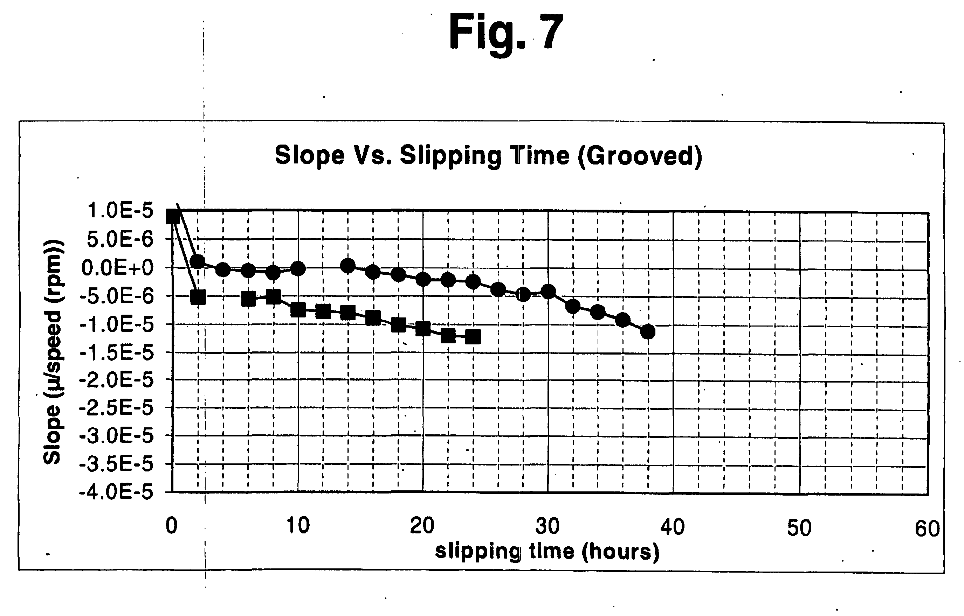

A comparison of slope v. slipping time in grooved materials for the Ex. 1 and the Compar. C is shown in Fig. 7. The failure criterion of mu-v (friction coefficient to slip speed (rpm)) slope is set at -1.0*E-5, which is acceptable in the industry. A product with a slope below this level is more prone to shudder. The Ex. 1 material allows the oil flow to be within the desired conditions and allows for good dissipation of heat.

### Example IV

The deposit of the friction modifying particle creates a dense surface layer which reduces permeability of the top layer. In certain embodiments, the friction material of the present invention has a permeability that is lower in both the radial direction (i.e., direction parallel to a plane defined by the top, or friction modifying particle layer and in the normal direction (i.e., a direction perpendicular to the plane defined by the top layer) than the radial and normal permeabilities of the first, or fibrous base material, layer. The lower permeability of the top friction modifying particle layer holds the fluid or lubricant at the surface of the friction material.

The friction material has a normal permeability (kₙₒᵣₘₐₗ) of about 0.03 Darcy of less and a lateral permeability (kₗₐₜₑᵣₐₗ) of about 0.03 Darcy or greater. In embodiments where the friction modifying particles comprise celite, the celite has micropores which aid in holding the lubricant at the surface due to the capillary action of the lubricant in the micropores. In particular, various types of celite, such as diatomaceous earth, have irregular shapes and rough or invaginated surfaces which further aid in holding the lubricant at the surface. Thus, the ratio of top friction modifying particle layer radial permeability to fibrous base layer radial permeability is less than 1 and the ratio of top, friction modifying particle layer normal permeability to fibrous base layer normal permeability is less than 1.

### INDUSTRIAL APPLICABILITY

The present invention is useful as a high energy friction material for use with clutch plates, transmission bands, brake shoes, synchronizer rings, friction disks or system plates.

The above descriptions of the preferred and alternative embodiments of the present invention are intended to be illustrative and are not intended to be limiting upon the scope and content of the following claims.

## Claims

1. A friction material comprising a first layer comprising a fibrous base material, and a second layer comprising at least one type of friction modifying particle on a top surface of the fibrous base material, **characterized in that** the second layer has an average thickness of about 30-200 µm, that the top layer has a permeability lower than the first layer, and that the friction modifying particles comprise silica particles having an average diameter size of from about 0.1 to about 80 µm and having an irregular shape.

2. The friction material of claim 1, wherein the layer of the friction modifying particles has a thickness of about 60 to about 100 µm.

3. The friction material of claim 1 or 2, wherein the top layer has a lower permeability in the radial direction and a lower permeability in the normal direction than the first layer.

4. The friction material of claim 1, 2, or 3, wherein the friction modifying particle have an average diameter size from about 0.5 to about 20 µm.

5. The friction material of any one of claims 1 to 4, wherein the fibrous base material has an average voids volume from about 50% to about 85%.

6. The friction material of any one of claims 1 to 5, wherein the friction modifying particles comprise celite particles.

7. The friction material of any one of claims 1 to 5, wherein the friction modifying particles comprise diatomaceous earth.

8. The friction material of any one of claims 1 to 7, wherein the friction modifying particles comprise a mixture of carbon particles and silica particles.

9. The friction material of claim 6, wherein the particles of celite have a size ranging from about 2 to about 20µm.

10. The friction material of any one of claims 1 to 9, wherein the friction modifying particles comprise metal oxides.

11. The friction material of any one of claims 1 to 9, wherein the friction modifying particles comprise nitrides.

12. The friction material of any one of claims 1 to 9, wherein the friction modifying particles comprise carbides.

13. The friction material of any one of the preceding claims, wherein the fibrous base material comprises a fabric material.

14. The friction material of any one of claims 1 to 13, wherein the fibrous base material is a nonwoven fibrous material.

15. The friction material of any one of claims 1 to 14, wherein the fibrous base material is a woven fibrous material.

16. The friction material of any one of the preceding claims, wherein the fibrous base material comprises from about 15 to about 25% cotton, about 40 to about 50% aramid fibers, 10 to about 20% carbon fibers, 5 to about 15% carbon particles, and about 5 to about 15% celite.

17. The friction material of claim 16, wherein the top layer of the friction material comprises silica friction modifying particles deposited on fibers and fillers in the fibrous base material.

18. The friction material of any one of the preceding claims, wherein the fibrous base material has an average pore diameter of about 5 to about 8µm.

19. The friction material of any one of claims 1 to 15, wherein the fibrous base material comprises about 10 to about 50%, by weight, of a less fibrillated aramid fiber; about 10 to about 35%, by weight, of activated carbon particles; about 5 to about 20%, by weight, cotton fibers, about 2 to about 15%, by weight, carbon fibers; and, about 10 to about 35%, by weight of a filler material.

20. The friction material of any one of the preceding claims including a resin impregnated into at least the fibrous base material.

21. The friction material of claim 20, wherein the resin comprises at least one phenolic resin, at least one modified phenolic resin, at least one silicon resin, at least one silicone modified resin, at least one epoxy resin, at least one epoxy modified resin, and mixtures of the above.

22. The friction material claim 20, wherein the resin comprises a mixture of at least one phenolic resin-and at least one silicone resin wherein the amount of silicone resin in the resin mixture ranges from approximately 5 to approximately 80%, by weight, based on the weight of the resin mixture.

23. The friction material of claim 21, wherein the phenolic resin is present in a solvent material and the silicone resin is present in a solvent material which is compatible with the solvent material of the phenolic resin.

24. The friction material of claim 21 or 23, wherein the amount of silicone resin present in the silicone-phenolic resin mixture ranges from about 20 to about 25%, by weight, based on the weight of the mixture.

25. The friction material of claim 21 or 23, wherein the amount of silicone resin present in the silicone phenolic resin mixture ranges from about 15 to about 25%, by weight, based on the weight of the mixture.

26. The friction material of any one of claims 21 to 25, wherein the modified phenolic resin comprises at least one epoxy phenolic resin.

27. The friction material of claim any one of claims 21 to 26, wherein the amount of epoxy resin present in the epoxy phenolic resin ranges from about 5 to about 25%, by weight, based on the weight of the epoxy phenolic resin.

28. The friction material of claim any one of claims 21 to 26, wherein the amount of epoxy resin present in the epoxy phenolic resin ranges from about 10 to about 15%, by weight, based on the weight of the epoxy phenolic resin.

## Patentansprüche

1. Reibmaterial mit einer ersten Schicht, die ein faserförmiges Basismaterial aufweist, und einer zweiten Schicht, die mindestens einen Typ eines reibungsmodifizierenden Partikels auf einer Deckfläche des faserförmigen Basismateriales besitzt, **dadurch gekennzeichnet, dass** die zweite Schicht eine durchschnittliche Dicke von etwa 30-200 µm hat, dass die Deckschicht eine Permeabilität besitzt, die geringer ist als die der ersten Schicht, und dass die reibungsmodifizierenden Partikel Siliciumdioxid-Partikel mit einer durchschnittlichen Durchmessergröße von etwa 0,1 bis etwa 80 µm und einer unregelmäßigen Form umfassen.

2. Reibmaterial nach Anspruch 1, bei dem die Schicht der reibungsmodifizierenden Partikel eine Dicke von etwa 60 bis etwa 100 µm hat.

3. Reibmaterial nach Anspruch 1 oder 2, bei dem die Deckschicht eine geringere Permeabilität in Radialrichtung und eine geringere Permeabilität in Normalrichtung als die erste Schicht besitzt.

4. Reibmaterial nach Anspruch 1, 2 oder 3, bei dem der reibungsmodifizierende Partikel eine durchschnittliche Durchmessergröße von etwa 0,5 bis etwa 20 µm hat.

5. Reibmaterial nach einem der Ansprüche 1 bis 4, bei dem das faserförmige Basismaterial ein durchschnittliches Hohlraumvolumen von etwa 50 % bis etwa 85 % hat.

6. Reibmaterial nach einem der Ansprüche 1 bis 5, bei dem die reibungsmodifizierenden Partikel Celit-Partikel umfassen.

7. Reibmaterial nach einem der Ansprüche 1 bis 5, bei dem die reibungsmodifizierenden Partikel Diatomeenerde umfassen.

8. Reibmaterial nach einem der Ansprüche 1 bis 7, bei dem die reibungsmodifizierenden Partikel ein Gemisch aus Kohlenstoffpartikeln und Siliciumdioxid-Partikeln umfassen.

9. Reibmaterial nach Anspruch 6, bei dem die Celit-Partikel eine Größe von etwa 2 bis etwa 20 µm besitzen.

10. Reibmaterial nach einem der Ansprüche 1 bis 9, bei dem die reibungsmodifizierenden Partikel Metalloxide umfassen.

11. Reibmaterial nach einem der Ansprüche 1 bis 9, bei dem die reibungsmodifizierenden Partikel Nitride umfassen.

12. Reibmaterial nach einem der Ansprüche 1 bis 9, bei dem die reibungsmodifizierenden Partikel Carbide umfassen.

13. Reibmaterial nach einem der vorangehenden Ansprüche, bei dem das faserförmige Basismaterial ein textiles Material aufweist.

14. Reibmaterial nach einem der Ansprüche 1 bis 13, bei dem das faserförmige Basismaterial ein nichtgewebtes Fasermaterial ist.

15. Reibmaterial nach einem der Ansprüche 1 bis 14, bei dem das faserförmige Basismaterial ein gewebtes Fasermaterial ist.

16. Reibmaterial nach einem der vorangehenden Ansprüche, bei dem das faserförmige Basismaterial etwa 15 bis etwa 25 % Baumwolle, etwa 40 bis etwa 50 % Aramidfasern, 10 bis etwa 20 % Carbonfasern, 5 bis etwa 15 % Carbonpartikel und etwa 5 bis etwa 15 % Celit umfasst.

17. Reibmaterial nach Anspruch 16, bei dem die Deckschicht des Reibmateriales reibungsmodifizierende Partikel aus Siliciumdioxid umfasst, die auf Fasern und Füllmaterialien im faserförmigen Basismaterial abgelagert sind.

18. Reibmaterial nach einem der vorangehenden Ansprüche, bei dem das faserförmige Basismaterial einen durchschnittlichen Porendurchmesser von etwa 5 bis etwa 8 µm besitzt.

19. Reibmaterial nach einem der Ansprüche 1 bis 15, bei dem das faserförmige Basismaterial etwa 10 bis etwa 50 Gew.% einer weniger fibrillierten Aramidfaser, etwa 10 bis etwa 35 Gew.% aktivierte Kohlenstoffpartikel, etwa 5 bis etwa 20 Gew.% Baumwollfasern, etwa 2 bis etwa 15 Gew.% Carbonfasern und etwa 10 bis etwa 35 Gew.% eines Füllmateriales umfasst.

20. Reibmaterial nach einem der vorangehenden Ansprüche, das ein Harz aufweist, mit dem mindestens das faserförmige Basismaterial imprägniert ist.

21. Reibmaterial nach Anspruch 20, bei dem das Harz mindestens ein Phenolharz, mindestens ein modifiziertes Phenolharz, mindestens ein Siliconharz, mindestens ein siliconmodifiziertes Harz, mindestens ein Epoxidharz, mindestens ein epoxidmodifiziertes Harz und Gemische hiervon umfasst.

22. Reibmaterial nach Anspruch 20, bei dem das Harz ein Gemisch aus mindestens einem Phenolharz und mindestens einem Siliconharz umfasst, wobei die Menge des Siliconharzes im Harzgemisch von etwa 5 bis etwa 80 Gew.% auf Basis des Gewichtes des Harzgemisches reicht.

23. Reibmaterial nach Anspruch 21, bei dem das Phenolharz in einem Lösungsmittel und das Siliconharz in einem Lösungsmittel, das mit dem Lösungsmittel des Phenolharzes kompatibel ist, vorhanden sind.

24. Reibmaterial nach Anspruch 21 oder 23, bei dem die Menge des im Siliconharz-Phenolharz-Gemisch vorhandenen Siliconharzes von etwa 20 bis etwa 25 Gew.% auf der Basis des Gewichtes des Gemisches reicht.

25. Reibmaterial nach Anspruch 21 oder 23, bei dem die Menge des im Siliconharz-Phenolharz-Gemisch vorhandenen Siliconharzes von etwa 15 bis etwa 25 Gew.% auf der Basis des Gewichtes des Gemisches reicht.

26. Reibmaterial nach einem der Ansprüche 21 bis 25, bei dem das modifizierte Phenolharz mindestens ein Epoxidphenolharz umfasst.

27. Reibmaterial nach einem der Ansprüche 21 bis 26, bei dem die Menge des im Epoxidphenolharz vorhandenen Epoxidharzes von etwa 5 bis etwa 25 Gew.% auf der Basis des Gewichtes des Epoxidphenolharzes reicht.

28. Reibmaterial nach einem der Ansprüche 21 bis 26, bei dem die Menge des im Epoxidphenolharz vorhandenen Epoxidharzes von etwa 10 bis etwa 15 Gew.% auf der Basis des Gewichtes des Epoxidphenolharzes reicht.

## Revendications

1. Matériau de friction comprenant une première couche comprenant un matériau de base fibreux, une seconde couche comprenant au moins un type de particule de modification de friction sur une surface supérieure du matériau de base fibreux, **caractérisé en ce que** la seconde couche présente une épaisseur moyenne d'environ 30 à 200 µm, ainsi que la couche supérieure présente une perméabilité inférieure à la première couche, et **en ce que** les particules de modification de friction comprennent des particules de silice ayant une taille de diamètre moyen d'environ 0,1 à environ 80 µm ayant une forme irrégulière.

2. Matériau de friction selon la revendication 1, dans lequel la couche des particules de modification de friction présente une épaisseur d'environ 60 à environ 100 µm.

3. Matériau de friction selon la revendication 1 ou 2, dans lequel la couche supérieure présente une perméabilité inférieure dans la direction radiale et une perméabilité inférieure dans la direction normale que la première couche.

4. Matériau de friction selon les revendications 1, 2 ou 3, dans lequel la particule de modification de friction présente une taille moyenne de diamètre d'environ 0,5 à environ 20 µm.

5. Matériau de friction selon l'une quelconque des revendications 1 à 4, dans lequel le matériau de base fibreux présente un volume de vides moyens d'environ 50 % à environ 85 %.

6. Matériau de friction selon l'une quelconque des revendications 1 à 5, dans lequel les particules de modification de friction comprennent des particules de célite.

7. Matériau de friction selon l'une quelconque des revendications 1 à 5, dans lequel les particules de modification de friction comprennent de la terre diatomée.

8. Matériau de friction selon l'une quelconque des revendications 1 à 7, dans lequel les particules de modification de friction comprennent un mélange de particules de carbone et de particules de silice.

9. Matériau de friction selon la revendication 6, dans lequel les particules de célite présentent une taille s'étalant d'environ 2 à environ 20 µm.

10. Matériau de friction selon l'une quelconque des revendications 1 à 9, dans lequel les particules de modification de friction comprennent des oxydes métalliques.

11. Matériau de friction selon l'une quelconque des revendications 1 à 9, dans lequel les particules de matériau de modification de friction comprennent des nitrures.

12. Matériau de friction selon l'une quelconque des revendications 1 à 9, dans lequel les particules de modification de friction comprennent des carbures.

13. Matériau de friction selon l'une quelconque des revendications précédentes, dans lequel le matériau de base fibreux comprend un matériau de tissu.

14. Matériau de friction selon l'une quelconque des revendications 1 à 13, dans lequel le matériau de base fibreux est un matériau fibreux non tissé.

15. Matériau de friction selon l'une quelconque des revendications 1 à 14, dans lequel le matériau de base fibreux est un matériau fibreux tissé.

16. Matériau de friction selon l'une quelconque des revendications précédentes, dans lequel le matériau de base fibreux comprend d'environ 15 à environ 25 % de coton, d'environ 40 à environ 50 % de fibres d'aramide, de 10 à environ 20 % de fibres de carbone, de 5 à environ 15 % de particules de carbone et environ 5 à environ 15 % de célite.

17. Matériau de friction selon la revendication 16, dans lequel la couche supérieure du matériau de friction comprend des particules de modification de friction en silice déposées sur les fibres et les charges dans le matériau de base fibreux.

18. Matériau de friction selon l'une quelconque des revendications précédentes, dans lequel le matériau de base fibreux présente un diamètre moyen de pore d'environ 5 à environ 8 µm.

19. Matériau de friction selon l'une quelconque des revendications 1 à 15, dans lequel le matériau de base fibreux comprend d'environ 10 à environ 50 % en poids de fibre d'aramide moins fibrilée, d'environ 10 à environ 35 % en poids, de particules de charbon actives, d'environ 5 à environ 20 % en poids, de fibres de coton, d'environ 2 à environ 15 % en poids de fibres de carbone ; et, d'environ 10 à environ 35 % en poids d'un matériau de charge.

20. Matériau de friction selon l'une quelconque des revendications précédentes incluant une résine imprégnée dans au moins le matériau de base fibreux.

21. Matériau de friction selon la revendication 20, dans lequel la résine comprend au moins une résine phénolique, au moins une résine phénolique modifiée, au moins une résine de silicone, au moins une résine de silicone modifiée, au moins une résine époxy, au moins une résine époxy modifiée et les mélanges de celles qui précèdent.

22. Matériau de friction selon la revendication 20, dans lequel la résine comprend un mélange d'au moins une résine phénolique et d'au moins une résine silicone dans lequel la quantité de résine silicone dans le mélange résineux s'étale d'approximativement 5 à approximativement 80 % en poids, sur la base du poids du mélange de résine.

23. Matériau de friction selon la revendication 21, dans lequel la résine phénolique est présente dans un matériau solvant et la résine de silicone est présente dans un matériau solvant qui est compatible avec le matériau solvant de la résine phénolique.

24. Matériau de friction selon la revendication 21 ou 23, dans lequel la quantité de résine silicone présente dans le mélange de résine silicone-phénolique s'étale d'environ 20 à environ 25 % en poids, sur la base du poids du mélange.

25. Matériau de friction selon la revendication 21 ou 23, dans lequel la quantité de résine silicone présente dans le mélange de résine silicone-phénolique s'étale d'environ 15 à environ 25 % en poids, sur la base du poids du mélange.

26. Matériau de friction selon l'une quelconque des revendications 21 à 25, dans lequel la résine phénolique modifiée comprend au moins une résine phénolique époxy.

27. Matériau de friction selon l'une quelconque des revendications 21 à 26, dans lequel la quantité de résine époxy présente dans le mélange de résine phénolique époxy s'étale d'environ 5 à environ 25 % en poids, sur la base du poids de la résine phénolique époxy.

28. Matériau de friction selon l'une quelconque des revendications 21 à 26, dans lequel la quantité de résine époxy présente dans la résine phénolique époxy s'étale d'environ 10 à environ 15 % en poids, sur la base du poids de la résine phénolique époxy.
